# FASCICULE DE BREVET EUROPEEN

(11) **EP 2 697 857 B1**
(45) Date de publication et mention de la délivrance du brevet: **18.02.2015**
(21) Numéro de dépôt: 12713979.8
(22) Date de dépôt: 10.04.2012
(51) Int. Cl.: H01M 8/10, C08G 77/395, C08K 9/06, C09C 3/12

(54) **COPOLYMERES PHOSPHONES SPECIFIQUES ET PARTICULES INORGANIQUES GREFFEES PAR LESDITS COPOLYMERES**
PHOSPHONIERTE SPEZIFISCHE COPOLYMERE UND DAMIT GEPFROPFTE ANORGANISCHE PARTIKEL
SPECIFIC PHOSPHONATED COPOLYMERS AND INORGANIC PARTICLES GRAFTED BY SAID COPOLYMERS

(30) Priorité: 12.04.2011 FR 1153187
(43) Date de publication de la demande: 19.02.2014
(73) Titulaire: Commissariat à l'Énergie Atomique et aux Énergies Alternatives, 75015 Paris (FR); Centre National de la Recherche Scientifique, 75016 Paris (FR)
(72) Inventeur: BUVAT, Pierrick, F-37250 Montbazon (FR); BOUCHETEAU, Thomas, F-92440 Malakoff (FR); DAVID, Ghislain, F-34400 Saint Christol (FR); GANACHAUD, François, F-34080 Montpellier (FR); KOSTJUK, Sergei Victorovich, Minsk 220096 (BY)
(74) Mandataire: Ahner, Philippe
(86) Numéro de dépôt international: PCT/EP2012/056447
(87) Numéro de publication internationale: WO 2012/140011

(56) Documents cités:
- US-A1- 2005 112 439
- US-A1- 2007 049 718
- US-A1- 2009 048 395
- SKIP GALLAGHER: "Synthesis and characterization of phosphonate-containing polysiloxanes", JOURNAL OF POLYMER SCIENCE PART A: POLYMER CHEMISTRY, vol. 41, no. 1, 1 janvier 2003 (2003-01-01), pages 48-59, XP055001422, ISSN: 0887-624X, DOI: 10.1002/pola.10550
- DATABASE WPI Week 201063 Thomson Scientific, London, GB; AN 2010-L05954 XP002675458, -& CN 101 792 470 A (UNIV WUHAN TECHNOLOGY) 4 août 2010 (2010-08-04)

## Description

### DOMAINE TECHNIQUE

La présente invention se rapporte à des copolymères spécifiques destinés à être greffés à la surface de particules inorganiques.

Ces particules ont pour caractéristique de présenter, une fois effectuée, si besoin est, l'hydrolyse de certains groupes desdits copolymères, une capacité d'échange ionique pouvant être modulable et particulièrement élevée.

De ce fait, ces particules trouvent leur application dans l'élaboration de matériaux conducteurs protoniques, en particulier de matériaux destinés à entrer dans la constitution de membranes conductrices de protons pour piles à combustible, tels que les piles fonctionnant à H_{2/}air ou à H₂/O₂ (connues sous l'abréviation PEMFC signifiant «Proton Exchange Membrane Fuel Cell») ou fonctionnant au méthanol/air (connues sous l'abréviation DMFC signifiant «Direct Methanol Fuel Cell»).

Ainsi, le domaine technique de l'invention peut être défini, de manière générale, comme celui des matériaux pouvant entrer dans la constitution d'électrolyte pour pile à combustible.

### ÉTAT DE LA TECHNIQUE ANTÉRIEURE

Une pile à combustible est un générateur électrochimique, qui convertit l'énergie chimique d'une réaction d'oxydation d'un combustible en présence d'un comburant en énergie électrique.

Généralement, une pile à combustible comporte une pluralité de cellules électrochimiques montées en série, chaque cellule comprenant deux électrodes de polarité opposée séparées par une membrane échangeuse de protons faisant office d'électrolyte solide.

La membrane assure le passage vers la cathode des protons formés lors de l'oxydation du combustible à l'anode.

Les membranes structurent le coeur de la pile et doivent, par conséquent, présenter de bonnes performances en matière de conduction protonique, ainsi qu'une faible perméabilité aux gaz réactants (H₂/air ou H₂/O₂ pour les piles PEMFC et méthanol/air pour les piles DMFC). Les propriétés des matériaux constituant les membranes sont essentiellement la stabilité thermique, la résistance à l'hydrolyse et à l'oxydation ainsi qu'une certaine flexibilité mécanique.

Des membranes utilisées couramment et remplissant ces exigences sont des membranes obtenues à partir de polymères constitués d'une chaîne principale linéaire perfluorée et de chaînes latérales portant des groupes acide sulfonique. Parmi les plus connues, on peut citer les membranes commercialisées sous la dénomination NAFION® par la société Dupont de Nemours ou sous la dénomination DOW®, FLEMION® ou Aciplex® par les sociétés Dow Chemicals et Asahi Glass. Ces membranes présentent de bonnes performances électrochimiques et une durée de vie intéressante mais néanmoins insuffisante pour les applications PEMFC. De plus, leur coût reste prohibitif pour la commercialisation. Pour les applications DMFC, elles présentent une perméabilité au méthanol élevée, ce qui limite également leur utilisation avec ce type de combustible. Enfin, ces membranes présentent une importante sensibilité à des températures supérieures à 80°C, ce qui les exclut d'une utilisation dans des piles fonctionnant à des températures élevées, à savoir entre 80°C et 150°C.

Pour les applications DMFC, elles présentent une perméabilité au méthanol élevée, ce qui limite également leur utilisation avec ce type de combustible. Qui plus est, les monomères les constituant présentent une structure de type hydrophile/hydrophobe, qui les rend particulièrement sensibles aux phénomènes d'hydratation et de déshydratation. Ainsi, leur température de fonctionnement se situe typiquement vers 80°C, puisque au-delà les instabilités d'hydratation vieillissent prématurément les membranes.

Un réel besoin existait donc de stabiliser la conduction protonique de ces membranes autour de 100°C. Pour ce faire, certains auteurs se sont orientés vers le développement de membranes plus complexes comprenant en plus d'une matrice en polymère organique conducteur, des composés ou particules susceptibles d'apporter une conductivité supplémentaire. Lorsque les particules sont des particules minérales, ces membranes sont désignées notamment par la terminologie « membranes hybrides inorganiques-organiques ».

Ainsi, les brevets US 2005/0227135 et US 2005/0244697 décrivent l'introduction de composés inorganiques hydrophiles, afin d'améliorer le niveau d'hydratation des membranes à haute température (les composés inorganiques étant des agglomérats de particules d'oxydes métalliques ou de phosphates métalliques pour US 2005/0227135 ou des matériaux échangeurs de cations à base d'argile pour US 2005/0244697).

Néanmoins, même si ces formulations de membranes composites améliorent les conductivités protoniques des membranes autour de 100°C, elles restent insuffisantes pour satisfaire les critères de fonctionnement d'une pile à combustible à ces températures.

Une alternative aux membranes hybrides inorganiques-organiques peut consister à greffer directement sur des particules inorganiques des composés organiques porteurs de groupes échangeurs de protons, comme cela est décrit dans WO 2005/101552, US 2005 0175880, où les groupes échangeurs de protons sont des groupes acide sulfonique, les membranes fabriquées à partir de telles particules pouvant fonctionner à des températures supérieures à 80°C mais limitées à 95°C. Pour fonctionner à des températures plus élevées que 95°C, une solution peut consister à greffer, à la surface de particules inorganiques, des composés organiques, tels que des chaînes de poly(acide vinylphosphonique), porteur de groupes acide phosphonique, ce greffage pouvant consister à polymériser les monomères correspondants (par exemple, l'acide vinylphosphonique ou le vinylphosphonate de diéthyle) sur des particules inorganiques, avec pour inconvénient que cette étape de polymérisation anionique nécessite l'utilisation du butyllithium comme amorceur de polymérisation dans des conditions de température très strictes (à savoir, environ -78°C).

Le document US 2005/112439 A1 décrit une méthode de préparation d'un copolymère silicone par hydrolyse et condensation d'alkoxysilanes et dialkylphosphonato-alkoxysilane. Cette méthode aboutit à un copolymère comprenant à la fois des motifs hydroxy-siloxane et des motifs phosphonato-siloxane. Ce copolymère est utilisé pour la préparation de piles à combustible.

Au regard de ce qui existe déjà, les auteurs de la présente se sont proposés de mettre au point une solution de remplacement aux particules inorganiques greffées existant dans l'art antérieur, et qui ne nécessitent pas des conditions drastiques de préparation notamment en terme de température, de sorte à pouvoir conférer à l'invention un caractère facilement transposable à l'échelle industrielle et qui permette d'accéder à des propriétés de conduction ionique modulables.

Pour ce faire, les auteurs de la présente invention ont notamment conçu des copolymères innovants destinés à être greffés à la surface de particules inorganiques, ces copolymères et ces particules greffées étant fabriqués également selon des procédés de préparation innovants.

### EXPOSÉ DE L'INVENTION

L'invention a ainsi trait à un copolymère comprenant un enchaînement de motifs répétitifs siloxanes d'au moins deux types différents, un premier type de motif répétitif siloxane comprenant au moins un

groupe -OH sur l'atome de silicium du motif répétitif siloxane et un deuxième type de motif répétitif comprenant au moins une chaîne pendante sur l'atome de silicium dudit motif répétitif, cette chaîne pendante consistant en une chaîne polymérique comprenant un enchaînement de motifs répétitifs porteurs d'au moins un groupe de formule -PO₃R¹R², dans laquelle R¹ et R² représentent, indépendamment l'un de l'autre, un atome d'hydrogène, un groupe alkyle, par exemple, un groupe alkyle comprenant de 1 à 4 atomes de carbone (par exemple, un groupe méthyle, un groupe éthyle ou un groupe isopropyle) ou un cation (tel qu'un cation alcalin, un cation ammonium).

Par motif répétitif siloxane, on entend un motif répétitif comprenant un groupe -Si-O-, l'atome de silicium étant lié, outre à un atome d'oxygène du même motif et à un autre atome d'oxygène du motif adjacent, à deux autres groupes.

Comme mentionné ci-dessus, les copolymères de l'invention comprennent, dans leur enchaînement, au moins deux types de motifs siloxanes, dont un premier type consiste en un motif répétitif siloxane comprenant au moins un groupe -OH lié directement à l'atome de silicium dudit motif et dont un deuxième type consiste en un motif répétitif siloxane comprenant au moins une chaîne pendante directement liée à l'atome de silicium dudit motif répétitif, ladite chaîne pendante consistant en une chaîne polymérique comprenant un enchaînement de motifs répétitifs porteurs d'au moins un groupe -PO₃R¹R², R¹ et R² étant tels que définis ci-dessus.

Des motifs répétitifs siloxanes du premier type susmentionné peuvent répondre à la formule (I) suivante : 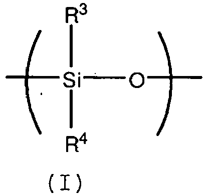 dans laquelle l'un des R³ et R⁴ représente un groupe -OH, tandis que l'autre groupe représente un groupe alkyle, par exemple, un groupe alkyle comprenant de 1 à 20 atomes de carbone, tel qu'un groupe méthyle.

Plus spécifiquement, un motif répétitif conforme à la définition donnée ci-dessus peut être un motif de formule (II) suivante :

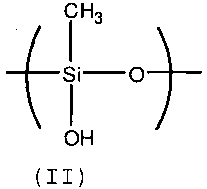

Des motifs répétitifs du deuxième type susmentionné peuvent répondre à la formule (III) suivante : 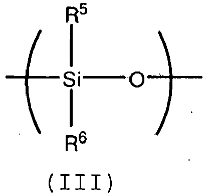 dans laquelle l'un des R⁵ et R⁶ représente une chaîne polymérique comprenant un enchaînement d'au moins un motif répétitif porteur d'au moins un groupe -PO₃R¹R², R¹ et R² étant tels que définis ci-dessus, tandis que l'autre groupe représente un groupe alkyle, par exemple, un groupe alkyle comprenant de 1 à 20 atomes de carbone, tel qu'un groupe méthyle.

En particulier, R⁶ peut représenter une chaîne polymérique comprenant un enchaînement de motifs répétitifs issus de la polymérisation d'au moins un monomère vinylique (à savoir, un monomère porteur d'au moins une double liaison carbone-carbone) porteur d'un groupe -PO₃R¹R², avec R¹ et R² étant tels que définis ci-dessus.

Parmi les monomères vinyliques susceptibles de convenir, on peut citer les monomères de formule (IV) suivante : 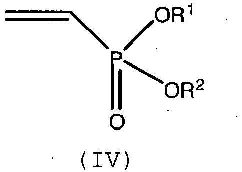 avec R¹ et R² étant tels que définis ci-dessus, auquel cas le motif répétitif issu de la polymérisation desdits monomères répond à la formule (V) suivante : 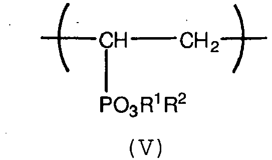 R¹ et R² étant tels que définis ci-dessus.

Des monomères spécifiques conformes à cette définition peuvent être des esters d'acide vinylphosphonique tel que le vinylphosphonate de diéthyle ou le vinylphosphonate de diméthyle.

Parmi d'autres monomères vinyliques susceptibles de convenir, on peut citer les monomères de formule (VI) suivante : 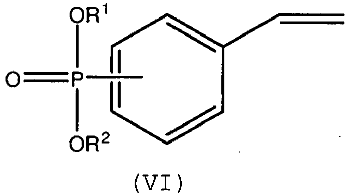 avec R¹ et R² étant tels que définis ci-dessus, le groupe -PO₃R¹R² pouvant être en position méta, para ou ortho par rapport au groupe -CH=CH₂, auquel cas le motif répétitif issu de la polymérisation desdits monomères répond à la formule (VII) suivante :

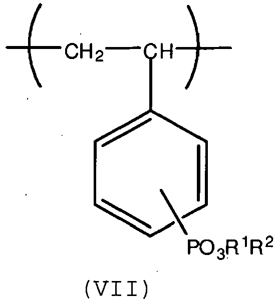

Des monomères spécifiques conformes à cette définition peuvent être l'acide 4-vinylbenzènephosphonique ou l'acide 3-vinylbenzènephosphonique.

Enfin, parmi d'autres monomères vinyliques susceptibles de convenir, on peut citer les monomères de formule suivante : 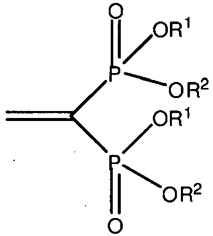 dans laquelle les R¹ et R² sont tels que définis ci-dessus. Un exemple spécifique de ce type de monomère est le vinylphosphonate de diisopropyle.

Outre les motifs siloxanes du premier type et du deuxième type mentionnés ci-dessus, les copolymères de l'invention peuvent comprendre des motifs répétitifs siloxanes d'un troisième type, pouvant répondre à la formule (VIII) suivante : 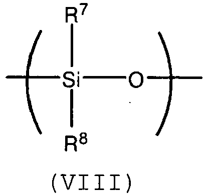 dans laquelle R⁷ et R⁸ représentent un groupe alkyle, par exemple, un groupe alkyle comprenant de 1 à 20 atomes de carbone, tel qu'un groupe méthyle.

D'un point de vue structural, les copolymères de l'invention peuvent être des copolymères à blocs.

Un copolymère à blocs spécifique conforme à l'invention peut répondre à la formule générale (IX) suivante : 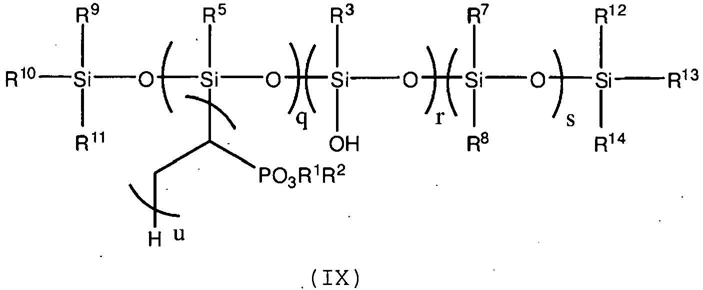 dans laquelle :
- les R¹, R², R³, R⁵, R⁷ et R⁸ répondent aux mêmes définitions que celles données ci-dessus ;
- les R⁹, R¹⁰, R¹¹, R¹², R¹³ et R¹⁴ représentent, indépendamment l'un de l'autre, un groupe alkyle, par exemple un groupe alkyle comprenant de 1 à 20 atomes de carbone, tel qu'un groupe méthyle ;
- q, r, s et u représentent le nombre de répétition du motif pris entre parenthèses, q, r et u étant supérieurs à 1 et s étant supérieur ou égal à 0.

Un copolymère particulier répondant à la définition donnée ci-dessus est un copolymère répondant à la formule (X) suivante : 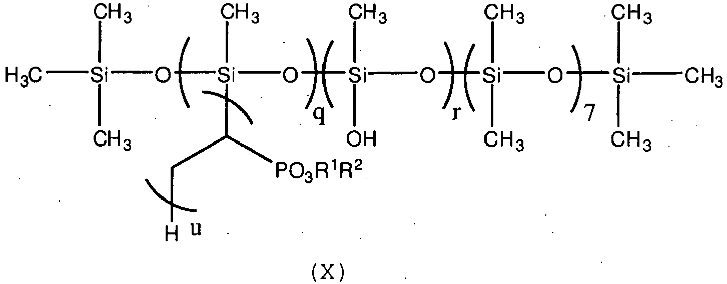 dans laquelle :
*q et r correspondent au nombre de répétition du motif pris entre parenthèses et la somme (q+r) est égale à 8 ;
*u correspond au nombre de répétition du motif pris entre parenthèses et est supérieur à 1 ;
*R¹ et R² sont tels que définis ci-dessus.

Les copolymères de l'invention peuvent comprendre au moins 0,1 % molaire de motif répétitif du premier type, par exemple, de 0,1 à 99,9% molaire ; au moins 0,1% molaire de motif répétitif du deuxième type, par exemple de 0,1 à 99,9% molaire et éventuellement de 0 à 99,8% molaire de motif répétitif du troisième type.

La masse molaire des copolymères de l'invention peut aller de 104 à 300000 g.mol⁻¹.

Les copolymères de l'invention peuvent être préparés par un procédé de préparation comprenant une étape de réaction, en présence d'eau et d'au moins un solvant organique, d'un (co)polymère de base du type polysiloxane comprenant un enchaînement de motifs répétitifs, dont un premier motif répétitif siloxane comprend au moins un atome d'hydrogène sur l'atome de silicium dudit motif, en présence d'un acide de Lewis du type borane avec un monomère vinylique (à savoir, un monomère vinylique porteur d'au moins une double liaison carbone-carbone) porteur d'un groupe -PO₃R¹R², R¹ et R² étant tels que définis ci-dessus, moyennant quoi il se forme un copolymère comprenant un enchaînement d'au moins deux types de motifs siloxanes, dont un premier type consiste en un motif répétitif siloxane comprenant au moins un groupe -OH lié directement à l'atome de silicium dudit motif et dont un deuxième type consiste en un motif répétitif siloxane comprenant au moins une chaîne pendante directement liée à l'atome de silicium dudit motif, ladite chaîne pendante consistant en une chaîne polymérique comprenant un enchaînement de motifs répétitifs porteurs d'au moins un groupe -PO₃R¹R², R¹ et R² étant tels que définis ci-dessus.

Sans être lié par la théorie, le procédé de préparation des copolymères de l'invention peut s'expliquer par les mécanismes suivants :
- l'acide de Lewis du type borane, si on le symbolise par la formule BX₃, forme au contact du (co)polymère de base au niveau des groupes Si-H un complexe intermédiaire -Si^{δ+}----^{δ-}HBX₃ ;
- l'eau présente dans le milieu réagit avec une partie des groupes sous forme de complexe -Si^{δ+}-^{δ-}HBX₃ pour former du dihydrogène et libérer l'acide de Lewis du type borane BX₃ laissant subsister sur le copolymère de base des groupes -Si-OH, ce qui signifie, en d'autres termes, qu'une partie des groupes -Si-H présents initialement sur le copolymère de base est transformée en groupes -Si-OH ;
- l'autre partie des groupes sous forme de complexe -Si^{δ+}----^{δ-}HBX₃ n'ayant pas réagi avec l'eau sert de point de départ à la polymérisation anionique des monomères vinyliques susmentionnés, moyennant quoi il se forme des chaînes polymériques liées à l'atome de silicium, lesdites chaînes polymériques comprenant un enchaînement de motifs répétitifs issus de la polymérisation desdits monomères vinyliques.

Comme mentionné ci-dessus, le (co)polymère de base du type polysiloxane comprend un enchaînement de motifs répétitifs, dont un premier motif répétitif siloxane comprend au moins un atome d'hydrogène sur l'atome de silicium dudit motif, ce premier motif pouvant répondre à la formule générale (XI) suivante : 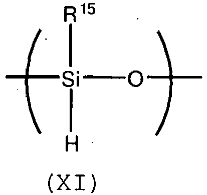 dans laquelle R¹⁵ est un atome d'hydrogène ou un groupe alkyle.

Outre ces motifs, ce (co)polymère de base peut comprendre d'autres motifs répétitifs, tel, que par exemple, un motif répétitif de formule (XII) suivante : 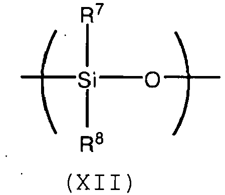 dans laquelle R⁷ et R⁸ représentent un groupe alkyle, par exemple, un groupe alkyle comprenant de 1 à 20 atomes de carbone, tel qu'un groupe méthyle.

Un copolymère de base spécifique conforme à l'invention peut répondre à la formule générale (XIII) suivante : 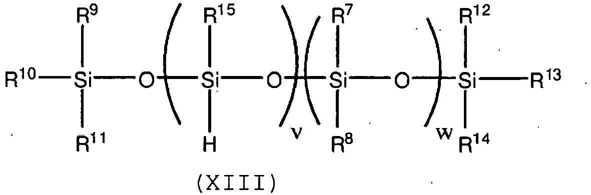 dans laquelle :
- les R⁹, R¹⁰, R¹¹, R¹², R¹³, R¹⁴, R¹⁵, R⁷ et R⁸ sont tels que définis ci-dessus ; et
- v et w représentent le nombre de répétition du motif pris entre parenthèses.

Un copolymère de base particulier répondant à la définition donnée ci-dessus est un copolymère répondant à la formula (XIV) suivante :

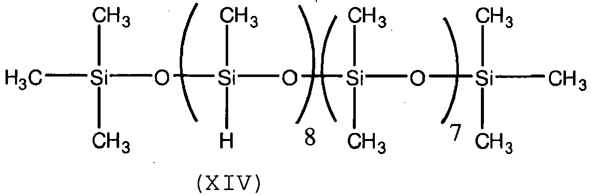

L'étape de réaction entre un (co)polymère de base et les monomères vinyliques est réalisée en présence d'un acide de Lewis du type borane, cet acide de Lewis pouvant être un acide de Lewis appartenant à la famille des triarylboranes, éventuellement perfluorés, tel que, par exemple, le tris(pentafluorophényl)borane.

L'étape de réaction, outre la présence d'eau, est réalisée en présence d'un solvant organique aprotique, tel qu'un solvant aromatique, comme le toluène, et ce à une température pouvant aller de 0 à 100°C pendant une durée pouvant aller de 1 minute à 24 heures.

Selon un mode particulier de réalisation de l'invention, lorsque l'on souhaite notamment maîtriser dans le copolymère conforme à l'invention la quantité de groupe Si-OH, ceci peut passer par le contrôle de la quantité d'eau présente dans le milieu réactionnel dans lequel va se dérouler l'étape de réaction susmentionnée.

Pour ce faire, avant la mise en contact du (co)polymère de base avec le milieu réactionnel, il peut être ajouté, dans le milieu réactionnel comprenant un solvant organique, de l'eau et l'acide de Lewis du type borane, un composé monosilane en une quantité prédéterminée, qui peut s'échelonner de 5 à 50% molaire par rapport au nombre de moles du motif porteur de groupe Si-H, de préférence de 20 à 35% molaire.

Ce composé monosilane peut être, par exemple, le pentaméthylsiloxane.

Sans être lié par la théorie, le composé monosilane forme un complexe avec l'acide de Lewis du type borane, lequel va réagir avec une partie de l'eau présente dans le milieu, moyennant quoi il se forme du dihydrogène et un monosilanol (issu du composé monosilane), qui restent inertes vis-à-vis de l'étape de réaction susmentionnnée. La consommation de l'eau dans le milieu ne doit pas être totale, de sorte à laisser une quantité spécifique d'eau qui sera apte à générer les fonctions silanols sur le (co)polymère de base, ces fonctions silanols pouvant être mises à profit ultérieurement pour le greffage de particules inorganiques.

A titre d'exemple, nous proposons le schéma réactionnel suivant avec des réactifs spécifiques :

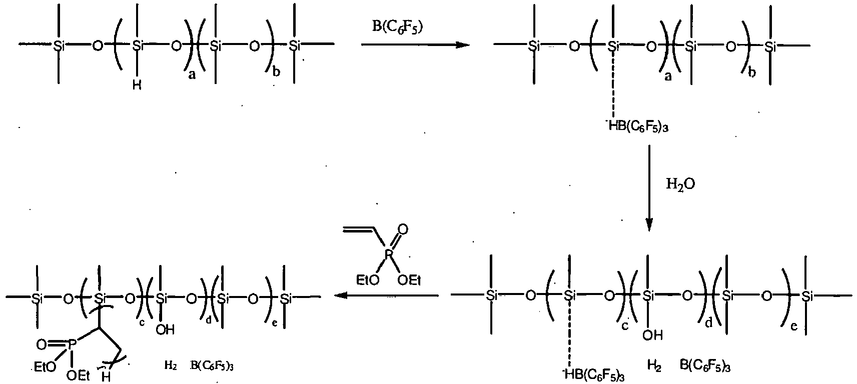

Et correspondant au groupe éthyle, a, b, c, d, e et f correspondant au nombre de répétition du motif pris entre parenthèses.

Les copolymères de l'invention, comme mentionné ci-dessus, sont avantageusement destinés à être greffés à des particules inorganiques de sorte à conférer à ces particules, une fonctionnalité liée aux caractéristiques du copolymère, notamment des caractéristiques de conduction protonique liées à la présence des groupes -PO₃R¹R².

Ainsi, l'invention a trait à des particules inorganiques greffées par au moins un copolymère tel que défini ci-dessus *via* au moins un groupe -Si-OH dudit copolymère pour former un groupe de liaison -Si-O- entre ledit copolymère et lesdites particules.

On précise que, par greffage, on entend classiquement l'immobilisation des copolymères à la surface des particules par le biais de liaisons covalentes entre lesdits copolymères et lesdites particules, ces liaisons covalentes résultant de la formation de groupes formant pont -Si-O- entre les copolymères et les particules.

Grâce au greffage de copolymères conformes à l'invention, il est possible, lorsque les groupes -PO₃R¹R² sont aptes à échanger des protons (ce qui est le cas lorsque R¹ et R² sont des atomes d'hydrogène ou des cations) d'augmenter, de façon significative, la capacité d'échange ionique, laquelle est directement liée au nombre de groupes acides échangeurs de protons présents dans la chaîne polymérique. Il est ainsi possible d'envisager l'utilisation de ces particules comme charges dans des matériaux ne présentant pas de propriétés de conduction protonique. Par ailleurs, il sera possible d'ajuster le niveau de conduction protonique des matériaux les incorporant, en contrôlant le nombre de motifs répétitifs comprenant des groupes acides échangeurs de protons présents dans les copolymères greffés à la surface des particules.

Les particules inorganiques peuvent être des particules de zéolithes, de phosphates ou phosphonates de zirconium, d'argiles, d'oxydes telles que des particules de silice, d'alumine, de zircone, d'oxyde de titane, greffées par des copolymères tels que définis ci-dessus.

En particulier, les particules inorganiques peuvent être des particules d'oxydes, telles que des particules de silice greffées par des copolymères tels que définis ci-dessus.

Ces particules, avant greffage, comprennent des groupes aptes à réagir avec les fonctions -Si-OH présentes au niveau du copolymère pour former un groupe formant pont -Si-O-, ces groupes aptes à réagir pouvant être des groupes -OH, ce qui est le cas classiquement des particules d'oxydes, telles que les particules de silice.

Les particules inorganiques greffées conformes à l'invention peuvent être préparées par un procédé de préparation comprenant une étape de mise en contact d'un copolymère conforme à l'invention avec des particules inorganiques comprenant au moins un groupe apte à réagir avec les groupes -Si-OH présents au niveau dudit copolymère pour former un groupe formant pont -Si-O-, moyennant quoi il se forme lesdites particules greffées.

L'étape de mise en contact peut être réalisée en mettant en contact le copolymère en solution organique (par exemple, dans un solvant organique aprotique, tel que le toluène) avec des particules inorganiques dispersées préalablement dans un solvant organique aprotique (tel que du toluène), le mélange résultant pouvant être chauffé à une température de reflux du mélange réactionnel pendant une durée efficace pour obtenir le greffage des copolymères aux particules inorganiques.

Le procédé peut comprendre, après greffage, si besoin est, une étape d'hydrolyse des groupes -PO₃R¹R² (lorsque R¹ et R² représentent un groupe alkyle) pour les rendre conducteurs de protons, ce qui est le cas lorsque R¹ et R² représentent un atome d'hydrogène ou un cation.

A l'issue de la réaction entre les copolymères de l'invention et les particules inorganiques et l'éventuelle étape d'hydrolyse, les particules obtenues peuvent être soumises à une ou plusieurs étapes de lavage, par exemple par centrifugation, pour éliminer les copolymères n'ayant pas réagi avec les particules, l'acide de Lewis du type borane et, le cas échéant, le composé monosilane et les éventuels oligomères formés à partir de celui-ci.

A titre d'exemple, la réaction de greffage de particules inorganiques avec des copolymères de l'invention peut être illustrée, avec des réactifs spécifiques, par le schéma réactionnel suivant : 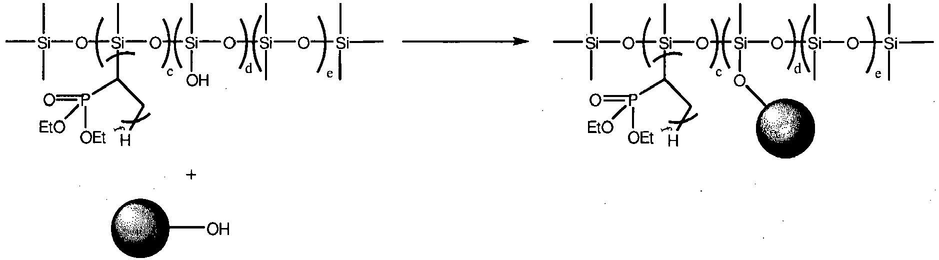 la sphère pleine correspondant à une particule inorganique dont un seul groupe -OH pendant est représenté, Et correspondant au groupe éthyle, c, d, e et f correspondant au nombre de répétition du motif pris entre parenthèses.

Les particules de l'invention peuvent présenter, comme indiqué plus haut, une conduction protonique de par la nature des copolymères greffés à leur surface, laquelle conduction protonique peut être ajustée en jouant sur le nombre de motifs répétitifs porteurs d'au moins un groupe échangeur de protons.

Par conséquent, ces particules trouvent tout naturellement leur application dans le domaine des matériaux conducteurs de protons, tels que les membranes de pile à combustible.

Ainsi, l'invention a trait également à un matériau conducteur de protons comprenant des particules telles que définies ci-dessus et éventuellement une matrice polymérique, dans laquelle sont dispersées lesdites particules.

Selon une première alternative, la matrice de polymère peut être une matrice de polymère (s) non conducteur(s) de protons, auquel cas les particules apporteront des propriétés de conduction protonique au matériau.

De tels polymères peuvent être des polymères fluorés tels qu'un polytétrafluoroéthylène (PTFE), un polyfluorure de vinylidène (PVDF), un copolymère tétrafluoroéthylène/éthylène (ETFE) et leurs dérivés. Les polymères fluorés ont notamment pour avantage de présenter une bonne tenue mécanique ainsi qu'une bonne résistance chimique.

De tels polymères peuvent être également des polymères aromatiques ou hétérocycliques. On précise que, par polymères aromatiques ou hétérocycliques, on entend un polymère dont la chaîne principale comprend un enchaînement de motifs aromatiques (par exemple, phénylène) ou hétérocycliques (par exemple, benzimidazole). Parmi ces polymères, on peut citer les polysulfones, les polyaryléthercétones, les polyimides, les polybenzimidazoles, les polyoxydes de phénylène, les polycarbonates. De tels polymères ont pour particularité de conférer au matériau composite, dans lequel ils sont intégrés, une rigidité et une résistance chimique et thermique élevées, sans nécessiter l'incorporation au matériau composite d'apport de renfort ou de charge.

Dans ce cas, les propriétés électrochimiques apportées uniquement par les particules inorganiques greffées dépendent directement de la qualité de la dispersion de celles-ci dans la matrice.

Selon une deuxième alternative, la matrice de polymère peut être une matrice en polymère(s) conducteur(s) de protons.

De tels polymères peuvent être des polymères perfluorés sulfonés. On précise que, par polymères perfluorés sulfonés, on entend des polymères comprenant une chaîne principale linéaire perfluorée et des chaînes latérales porteurs de groupements acide sulfonique. De tels polymères sont notamment disponibles dans le commerce sous la marque déposée NAFION® par la société Dupont de Nemours, ou ACIPLEX-S® de la société Asahi Chemical.

Des polymères conducteurs de protons peuvent être également des polymères aromatiques ou hétérocycliques porteurs de fonctions acides choisies parmi -SO₃H, -PO₃H₂ et -CO₂H. De tels polymères peuvent être des polysulfones, des polyaryléthercétones, des polyimides, des polybenzimidazoles, des polyoxydes de phénylène ou des polycarbonates.

Le matériau selon l'invention se présente avantageusement sous forme d'un film, présentant, par exemple, une épaisseur allant de 20 à 200 µm.

Les matériaux de l'invention, lorsqu'ils se présentent sous forme d'un film, peuvent être préparés par un procédé dit de coulée/évaporation, ce qui implique la mise en oeuvre des étapes suivantes :
- une étape de dépôt sur un support d'un mélange comprenant lesdites particules de l'invention et un solvant organique et éventuellement un ou plusieurs polymères destiné(s) à constituer une matrice polymérique ; et
- une étape d'évaporation dudit solvant organique.

Si cela n'a pas été déjà réalisé lors de la formation des particules greffées, il peut être mis en oeuvre, après l'étape d'évaporation, une étape d'hydrolyse des groupes -PO₃R¹R² (lorsque R¹ et R² représentent un groupe alkyle) pour les rendre conducteurs de protons, ce qui est le cas lorsque R¹ et R² représentent un atome d'hydrogène ou un cation.

Le support, par exemple, peut être en verre, en alumine ou encore en polyéthylène. A l'issue de ce procédé dit de coulée/évaporation, on obtient un matériau sous forme de film déposé sur le support. Le film obtenu peut être facilement désolidarisé du support, pour donner un film conducteur protonique auto-supporté.

On précise que les solvants susceptibles d'être utilisés dans le cadre de ce procédé peuvent être choisis parmi les solvants polaires aprotiques tels que le N-méthyl-2-pyrrolidinone, le diméthylformamide, le diméthylacétamide, le tétrahydrofurane, le diméthylsiloxane, ou encore des solvants chlorés comme le chloroforme, mais aussi des solvants tels que les alcools, les éthers, l'acétone.

Du fait de leurs propriétés mécaniques, ces matériaux peuvent être mis en oeuvre efficacement et conduire à des films minces suffisamment résistants pour être utilisés comme membranes pour pile à combustible.

Ainsi l'invention a pour objet une membrane pour pile à combustible comprenant des particules telles que définies ci-dessus.

Ces membranes se présentent avantageusement sous la forme de films minces, ayant, par exemple, une épaisseur allant de 20 à 200 µm.

Ces membranes présentent avantageusement une imperméabilité suffisante aux gaz réactants (tels que H₂ et O₂) et sont stables, de préférence, jusqu'à une température d'au moins 150°C.

Les membranes telles que définies ci-dessus peuvent être avantageusement incorporées dans des dispositifs de pile à combustible.

Ainsi, l'invention a trait également à un dispositif comprenant au moins un assemblage électrode-membrane-électrode, dans lequel la membrane est telle que définie ci-dessus et est disposée entre deux électrodes.

Le dispositif de pile à combustible comprend généralement plusieurs assemblages électrode-membrane-électrode.

Pour préparer un tel assemblage, la membrane peut être placée entre deux électrodes, par exemple en tissu ou en papier de carbone imprégné d'un catalyseur. L'ensemble formé de la membrane disposée entre les deux électrodes est ensuite pressé à une température adéquate afin d'obtenir une bonne adhésion électrode-membrane.

L'assemblage électrode-membrane-électrode est ensuite placé entre deux plaques assurant la conduction électrique et l'alimentation en réactifs aux électrodes. Ces plaques sont communément désignées par le terme de plaques bipolaires.

L'invention va maintenant être décrite en référence aux exemples suivants, donnés à titre illustratif et non limitatif.

### BRÈVE DESCRIPTION DES DESSINS

La figure 1 représente un spectre RMN ²⁹Si de particules de silice avant greffage (courbe a) et après greffage (courbe b) obtenues conformément à l'exemple 4.
La figure 2 représente un spectre RMN ¹³C des particules de silice obtenues après greffage conformément à l'exemple 4.
La figure 3 représente un spectre RMN ³¹P des particules de silice obtenues après greffage conformément à l'exemple 4.
La figure 4 représente un thermogramme illustrant l'évolution de la perte massique P(%) en fonction de la température T (°C) (respectivement courbes a, b et c pour les particules greffées avec le copolymère de l'exemple 1, le copolymère de l'exemple 2 et le copolymère de l'exemple 3).

### EXPOSÉ DÉTAILLÉ DE MODES DE RÉALISATION PARTICULIERS

Dans les exemples qui suivent, les réactifs suivants ont été utilisés :
- le vinylphosphonate de diéthyle (symbolisé par l'abréviation DEVP) et le toluène fournis par Aldrich ;
- le pentadiméthylsiloxane, le poly(hydrométhyl-co-diméthyl)siloxane (symbolisé par l'abréviation PHM-co-DMS) et le tris(pentafluorophényl)borane fournis par ABCR.

Le toluène a été séché pendant 24 heures à l'hydrure de calcium puis distillé.

Les étapes de polymérisations sont réalisées dans des tubes de Schlenk de 10 mL sous atmosphère inerte d'argon munis d'un agitateur magnétique et d'un septum. Trois cycles vide/argon sont effectués avant l'introduction des réactifs.

### EXEMPLE 1

Le présent exemple a trait à la préparation d'un polymère conforme à l'invention résultant de la polymérisation du vinylphosphonate de diéthyle de formule suivante : 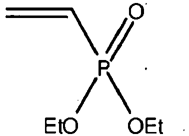 à partir d'un copolymère de base, le poly(hydrométhyl-co-diméthyl)siloxane de formule suivante :

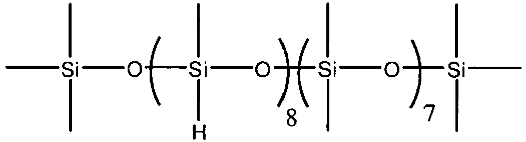

Le vinylphosphonate de diéthyle (0,704 g ; 4,3*10⁻³ mol) est ajouté dans le tube. Parallèlement, du tris(pentafluorophényl)borane (210 mg ; 4,3*10⁻⁴ mol) est solubilisé dans le toluène. La solution est ensuite additionnée dans le tube. Puis, du pentadiméthylsiloxane (0,190 g ; 1,28*10⁻³ mol) est introduit. La température est alors fixée à 50°C. Environ 15 minutes après l'ajout du pentadiméthylsiloxane, un fort dégagement gazeux est observé et commence à s'estomper environ 30 minutes plus tard. Le poly(hydrométhyl-co-diméthyl)siloxane (1 g ; 2,13*10⁻³ mol) est ajouté à ce moment précis. La réaction se déroule pendant 16 heures à 85°C. A la fin de la réaction, le mélange réactionnel est conservé.

### EXEMPLE 2

Le présent exemple a trait à la préparation d'un polymère conforme à l'invention résultant de la polymérisation du vinylphosphonate de diéthyle de formule suivante : 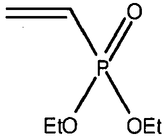 à partir d'un copolymère de base, le poly(hydrométhyl-co-diméthyl)siloxane de formule suivante :

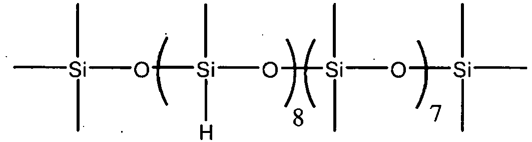

Le vinylphosphonate de diéthyle (0,704 g ; 4,3*10⁻³ mol) est ajouté dans le tube. Parallèlement, du tris(pentafluorophényl)borane (210 mg ; 4,3*10⁻⁴ mol) est solubilisé dans le toluène. La solution est ensuite additionnée dans le tube. Puis, du pentadiméthylsiloxane (0,190 g ; 1,28*10⁻³ mol) est introduit. La température est alors fixée à 50°C. Environ 15 minutes après l'ajout du pentadiméthylsiloxane, un fort dégagement gazeux est observé et commence à s'estomper environ 30 minutes plus tard. Le poly(hydrométhyl-co-diméthyl)siloxane (2 g ; 4,26*10⁻³ mol) est ajouté à ce moment précis. La réaction se déroule pendant 16 heures à 85°C. A la fin de la réaction, le mélange réactionnel est conservé.

### EXEMPLE 3

Le présent exemple a trait à la préparation d'un polymère conforme à l'invention résultant de la polymérisation du vinylphosphonate de diéthyle de formule suivante : 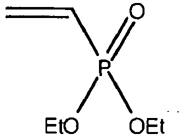 à partir d'un copolymère de base, le poly(hydrométhyl-co-diméthyl)siloxane de formule suivante :

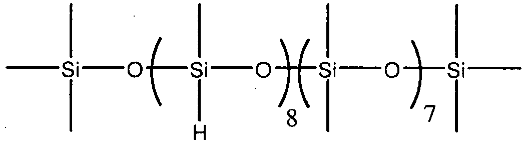

Le vinylphosphonate de diéthyle (0,704 g ; 4,3*10⁻³ mol) est ajouté dans le tube. Parallèlement, du tris(pentafluorophényl)borane (210 mg ; 4,3*10⁻⁴ mol) est solubilisé dans le toluène. La solution est ensuite additionnée dans le tube. Puis, du pentadiméthylsiloxane (0,190 g ; 1,28*10⁻³ mol) est introduit. La température est alors fixée à 50°C. Environ 15 minutes après l'ajout du pentadiméthylsiloxane, un fort dégagement gazeux est observé et commence à s'estomper environ 30 minutes plus tard. Le poly(hydrométhyl-co-diméthyl)siloxane (4 g ; 4,56*10⁻³ mol) est ajouté à ce moment précis. La réaction se déroule pendant 16 heures à 85°C. A la fin de la réaction, le mélange réactionnel est conservé.

### EXEMPLE 4

Le présent exemple illustre la préparation de particules de silice greffées par les copolymères préparés selon les exemples 1 et 3 exposés ci-dessus.

Pour ce faire, une suspension de 2 g de nanoparticules de silice (préalablement séchées à 130°C pendant 24 heures sous azote) dans 120 mL de toluène est préparée dans un tricol sous agitation mécanique et ultrasons. La suspension est mise à reflux dans un bain d'huile pendant 1 heure avec agitation. Le mélange réactionnel obtenu à la fin de la réaction du DEVP sur le PHM-co-DMS conformément aux exemples 1 à 3 est ajouté et le reflux est maintenu pendant 16 heures supplémentaires. Les nanoparticules de silice fonctionnalisée sont récupérées et lavées par du toluène (2 fois) grâce à des cycles de centrifugation, afin d'éliminer le polymère qui n'a pas réagi. L'échantillon obtenu (3,3 g) est séché à 90°C pendant 24 heures sous vide.

Les particules obtenues à l'issue des différentes expériences ont été caractérisées par RMN solide CP/MAS ²⁹Si. Les spectres obtenus avec les copolymères obtenus selon les exemples 1 à 3 ne présentent pas de différences significatives.

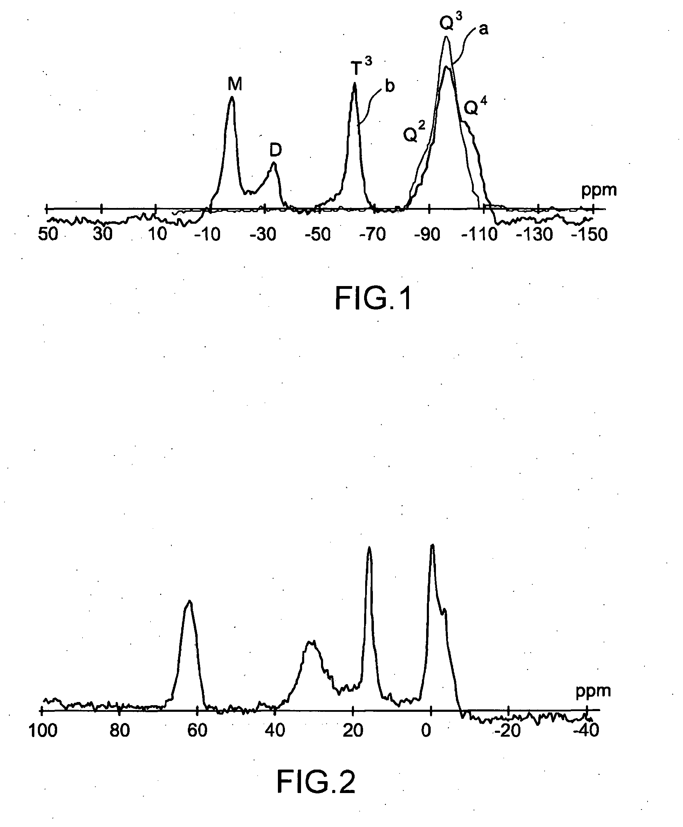

Les spectres obtenus sont représentés sur la figure 1, le spectre (a) correspondant au spectre obtenu avec les particules de silice avant toute modification et le spectre (b) correspondant au spectre obtenu avec les particules de silice après réaction de greffage.

Les particules obtenues à l'issue du greffage peuvent être représentées par la formule suivante : 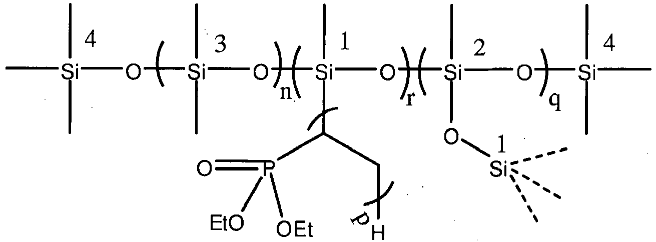 n, r, q et p représentant le nombre de répétition des motifs pris entre parenthèses, Et correspondant à un groupe éthyle, l'atome de silicium lié à trois liaisons en pointillés correspondant à un atome de silicium appartenant à une particule de silice.

Comparativement au spectre (a), il est observé sur le spectre (b), une disparition du signal correspondant aux atomes de silicium du type Q² apparaissant vers -85 ppm combiné à l'apparition d'un signal du type Q⁴ vers -105 ppm. Les atomes de silicium Q⁴ correspondent à ceux en surface des particules de silice liés au copolymère phosphoné, soit ceux indiqués par le chiffre 1 sur la formule ci-dessus. Un signal de résonance apparaît vers -65 ppm correspondant aux atomes de silicium de type T³ (ceux-ci étant indiqués par le chiffre 2 de la formule ci-dessus), signal caractéristique des atomes de silicium liés à 3 atomes d'oxygène. Le signal apparaîssant à -35 ppm correspond aux atomes de silicium de type D (ceux-ci étant indiqués par le chiffre 3 de la formule ci-dessus), signal caractéristique des atomes de silicium liés à deux atomes d'oxygène. Enfin, le signal qui est observé vers -15 ppm correspond aux atomes de silicium de type M (ceux-ci étant indiqués par le chiffre 4 de la formule ci-dessus), signal caractéristique des atomes de silicium liés à un atome d'oxygène.

Les particules issues des différentes expériences ont été caractérisées par RMN solide CP/MAS ¹³C. Les spectres obtenus avec les copolymères obtenus selon les exemples 1 à 3 ne présentent pas de différences significatives.

Les spectres obtenus sont représentés sur la figure 2.

La formule ci-dessus est celle des particules obtenues à l'issue du greffage avec une numérotation des atomes de carbone spécifique : 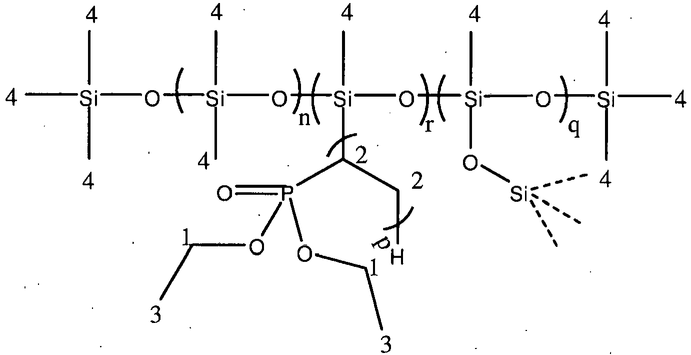 n, r, q et p représentant le nombre de répétition des motifs pris entre parenthèses, l'atome de silicium lié à trois liaisons en pointillés correspondant à un atome de silicium appartenant à une particule de silice.

Un signal de résonance à 62 ppm correspondant aux atomes de carbone numérotés 1 est observé. Le signal à 36 ppm correspond aux atomes de carbone 2 de la chaîne aliphatique. Le signal, qui apparaît à 18 ppm correspond aux atomes de carbone numérotés 3. Enfin, le signal à 0 ppm correspond aux atomes de carbone 4, signal caractéristique d'atomes de carbone appartenant à un enchaînement siloxane. Ce spectre atteste ainsi du greffage des particules de silice par les copolymères des exemples 1 à 3.

Les particules issues des différentes expériences ont été caractérisées par RMN solide CP/MAS ³¹P. Les spectres obtenus avec les copolymères obtenus selon les exemples 1 à 3 ne présentent pas de différences significatives.

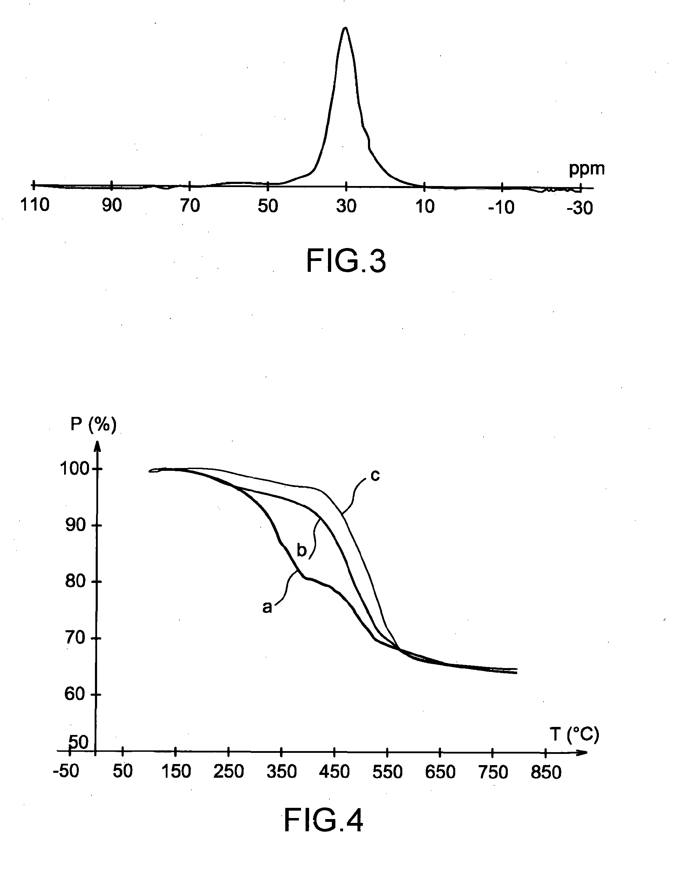

Le spectre obtenu est représenté sur la figure 3.

Un seul large signal de résonance est observé sur ce spectre centré à 30 ppm, caractéristique des groupements phosphonate de diéthyle.

Les particules isolées ont également été caractérisées par ATG, les résultats étant reportés, sur la figure 4, sous forme d'un graphique illustrant l'évolution de la perte massique P(en %) en fonction de la température T(°C) (respectivement courbes a, b et c pour les particules greffées avec le copolymère de l'exemple 1, le copolymère de l'exemple 2 et le copolymère de l'exemple 3). La fraction massique à 850°C est imputable à la partie inorganique constituée par les particules de silice en tant que telles. Le complément à 100 est imputable à la partie organique greffée aux particules de silice.

Pour les particules obtenues à partir des copolymères de l'exemple 1, 2 et 3, la partie organique représente 35% massique.

La perte de masse comprise dans la zone située entre 150 et 350°C correspond au départ des fonctions éthyles des groupes phosphonates, lesquelles fonctions représentent 55% en masse du motif diéthylvinylphosphonate. A partir de ces données, il est possible d'en déduire le pourcentage massique des motifs diéthylvinylphosphonate dans les produits obtenus.

Par exemple, pour les particules obtenues par greffage des copolymères de l'exemple 1, la perte de masse dans la zone située de 150 à 350°C est évaluée à environ 22%. Partant du principe susmentionné selon lequel les fonctions éthyle représentent 55% en masse du motif diéthylvinylphosphonate, on évalue ainsi à 40% massique la fraction totale des chaînes de copolymère greffées aux particules de silice. Sachant qu'il reste 65% en masse à la fin de l'analyse thermique et que la contribution de cette fraction ne provient que de la partie inorganique seule (en l'occurrence, la silice), le % de copolymère sur chaque particule peut être estimé à 5%. A partir de ces différentes fractions, le nombre répétitif de motif vinylphosphonate de diéthyle peut être estimé à 60, ce qui peut permettre d'estimer la capacité d'échange ionique à 2,31 méq.g⁻¹.

### EXEMPLE 5

Cet exemple illustre la préparation d'une membrane à partir des produits obtenus à l'exemple 4 par un procédé dit de coulée/évaporation d'une solution desdits produits. Le solvant utilisé est le diméthylformamide. Après la coulée de la solution sur une plaque de verre, la membrane est obtenue après séchage pendant 24 heures à 60°C. Elle est immergée ensuite dans de l'eau distillée puis récupérée. Pour obtenir l'hydrolyse des groupes phosphonates en groupes phosphoniques, la membrane est plongée dans une solution aqueuse d'acide chlorhydrique 12M pendant environ 70 heures. Le dosage de l'élément carbone avant et après l'hydrolyse indique que le taux de conversion est de 95%. Afin d'éliminer toute trace d'acide, la membrane est lavée à plusieurs reprises dans de l'eau distillée.

## Revendications

1. Copolymère comprenant un enchaînement de motifs répétitifs siloxanes d'au moins deux types différents, un premier type de motif répétitif siloxane comprenant au moins un groupe -OH sur l'atome de silicium du motif répétitif siloxane et un deuxième type de motif répétitif comprenant au moins une chaîne pendante sur l'atome de silicium dudit motif répétitif, cette chaîne pendante consistant en une chaîne polymérique comprenant un enchaînement de motifs répétitifs porteurs d'au moins un groupe de formule -PO₃R¹R², dans laquelle R¹ et R² représentent, indépendamment, un atome d'hydrogène, un groupe alkyle ou un cation.

2. Copolymère selon la revendication 1, dans lequel le motif répétitif du premier type répond à la formule (I) suivante : 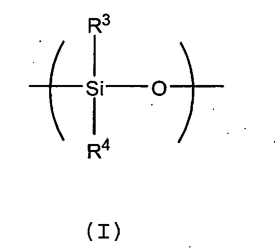 dans laquelle l'un des R³ et R⁴ représente un groupe -OH, tandis que l'autre groupe représente un groupe alkyle.

3. Copolymère selon l'une quelconque des revendications précédentes, dans lequel le motif répétitif du deuxième type répond à la formule (**III**) suivante : 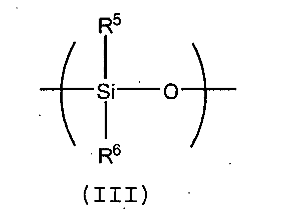 dans laquelle l'un des R⁵ et R⁶ représente une chaîne polymérique comprenant un enchaînement d'au moins un motif répétitif porteur d'au moins un groupe -PO₃R¹R², R¹ et R² étant tels que définis à la revendication 1, tandis que l'autre groupe représente un groupe alkyle.

4. Copolymère selon la revendication 3, dans lequel R⁶ représente une chaîne polymérique comprenant un enchaînement de motifs répétitifs issus de la polymérisation d'au moins un monomère vinylique porteur d'un groupe -PO₃R¹R², R¹ et R² étant tels que définis à la revendication 1.

5. Copolymère selon la revendication 4, dans lequel le monomère vinylique répond à la formule (IV) suivante : 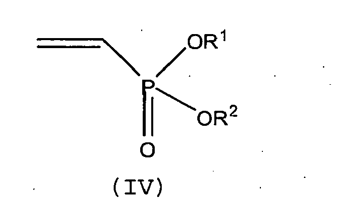 avec R¹ et R² étant tels que définis à la revendication 1, auquel cas le motif répétitif issu de la polymérisation dudit monomère répond à la formule (V) suivante :

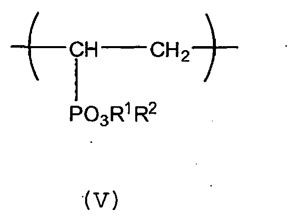

6. Copolymère selon l'une quelconque des revendications précédentes, comprenant, en outre, au moins un motif répétitif siloxane d'un troisième type, répondant à la formule (VIII) suivante : 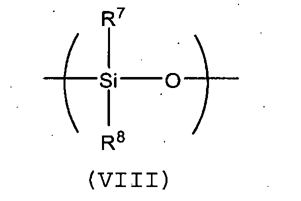 dans laquelle R⁷ et R⁸ représentent un groupe alkyle.

7. Copolymère selon l'une quelconque des revendications précédentes, qui est un copolymère à blocs.

8. Copolymère selon l'une quelconque des revendications précédentes, qui répond à la formule générale (IX) suivante : 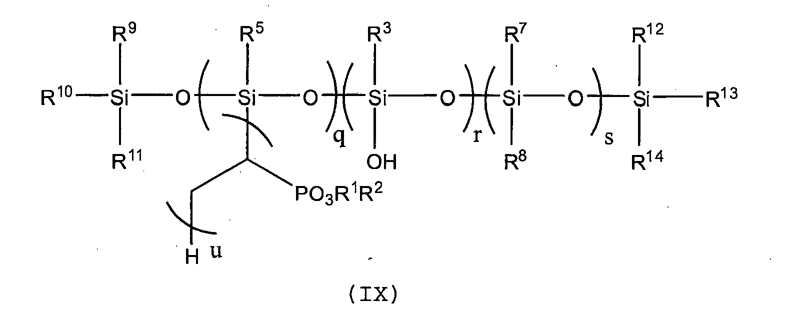 dans laquelle.:
- les R¹, R², R³, R⁵, R⁷ et R⁸ répondent aux mêmes définitions que celles données aux revendications 1, 2, 3 et 6;
- les R⁹, R¹⁰, R¹¹, R¹², R¹³ et R¹⁴ représentent, indépendamment l'un de l'autre, un groupe alkyle ;
- q, r, s et u représentant le nombre de répétition du motif pris entre parenthèses, q, r et u étant supérieurs à 1 et s étant supérieur ou égal à 0.

9. Procédé de préparation d'un copolymère tel que défini à la revendication 1, comprenant une étape de réaction, en présence d'eau et d'au moins un solvant organique, d'un (co) polymère de base du type polysiloxane comprenant un enchaînement de motifs répétitifs, dont un premier motif répétitif siloxane comprend au moins un atome d'hydrogène sur l'atome de silicium dudit motif, en présence d'un acide de Lewis du type borane avec un monomère vinylique porteur d'un groupe -PO₃R¹R², R¹ et R² étant tels que définis à la revendication 1, moyennant quoi il se forme un copolymère comprenant un enchaînement d'au moins deux types de motifs siloxanes, dont un premier type consiste en un motif répétitif siloxane comprenant au moins un groupe -OH lié directement à l'atome de silicium dudit motif et dont un deuxième type consiste en un motif répétitif siloxane comprenant au moins une chaîne pendante directement liée à l'atome de silicium dudit motif, ladite chaîne pendante consistant en une chaîne polymérique comprenant un enchaînement de motifs répétitifs porteurs d'au moins un groupe -PO₃R¹R².

10. Procédé selon la revendication 9, dans lequel le (co)polymère de base du type polysiloxane comprend un enchaînement de motifs répétitifs, dont un premier motif répétitif siloxane comprend au moins un atome d'hydrogène sur l'atome de silicium dudit motif, ce premier motif répondant à la formule générale (XI) suivante : 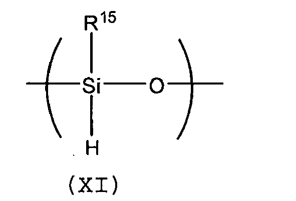 dans laquelle R¹⁵ est un atome d'hydrogène ou un groupe alkyle.

11. Procédé selon la revendication 9 ou 10, dans lequel le copolymère de base comprend, en outre, un motif répétitif de formule (XII) suivante : 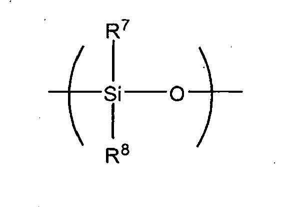 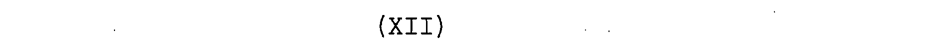 dans laquelle R⁷ et R⁸ représentent un groupe alkyle.

12. Procédé selon l'une quelconque des revendications 9 à 11, dans lequel le copolymère de base répond à la formule générale (XIII) suivante : 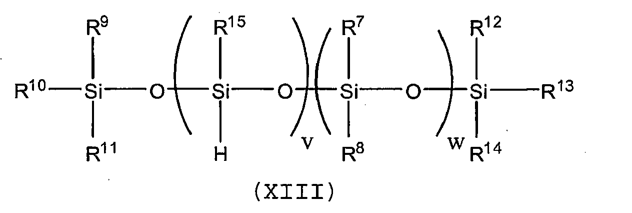 dans laquelle :
- les R⁹, R¹⁰, R¹¹, R¹², R¹³, R¹⁴, R¹⁵, R⁷ et R⁸ sont tels que définis aux revendications 8 et 10; et
- v et w représentent le nombre de répétition du motif pris entre parenthèses.

13. Procédé selon l'une quelconque des revendications 9 à 12, dans lequel, il peut être ajouté, dans le milieu réactionnel comprenant un solvant organique, de l'eau et l'acide de Lewis du type borane avant l'introduction du copolymère de base, un composé monosilane.

14. Particule inorganique greffée par au moins un copolymère tel que défini selon l'une quelconque des revendications 1 à 8 via au moins un groupe -Si-OH dudit copolymère pour former une liaison -Si-O- entre ledit copolymère et ladite particule.

15. Particule inorganique selon la revendication 14, qui est une particule d'oxyde.

16. Membrane de pile à combustible comprenant des particules inorganiques telles que définies selon l'une quelconque des revendications 14 ou 15.

17. Dispositif de pile à combustible comprenant au moins un assemblage électrode-membrane-électrode, dans lequel la membrane est telle que définie selon la revendication 16.

## Patentansprüche

1. Copolymer, umfassend eine Verkettung von sich wiederholenden Siloxaneinheiten von wenigstens zwei verschiedenen Typen, wobei ein erster Typ einer sich wiederholenden Siloxaneinheit wenigstens eine Gruppe -OH an dem Siliziumatom der sich wiederholenden Siloxaneinheit umfaßt und ein zweiter Typ einer sich wiederholenden Einheit wenigstens eine hängende Kette an dem Siliziumatom der sich wiederholenden Einheit umfaßt, wobei diese hängende Kette aus einer Polymerkette besteht, die eine Verkettung von sich wiederholenden Einheiten umfaßt, welche Träger wenigstens einer Gruppe der Formel -PO₃R¹R² sind, wobei R¹ und R² unabhängig ein Wasserstoffatom, eine Alkylgruppe oder ein Kation darstellen.

2. Copolymer nach Anspruch 1, bei dem die sich wiederholende Einheit des ersten Typs der nachfolgenden Formel (I) genügt: 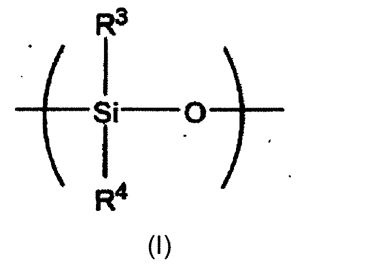 wobei das eine von R³ und R⁴ eine Gruppe -OH darstellt, wohingegen die andere Gruppe eine Alkylgruppe darstellt.

3. Copolymer nach einem der vorhergehenden Ansprüche, bei dem die sich wiederholende Einheit des zweiten Typs der nachfolgenden Formel (III) genügt: 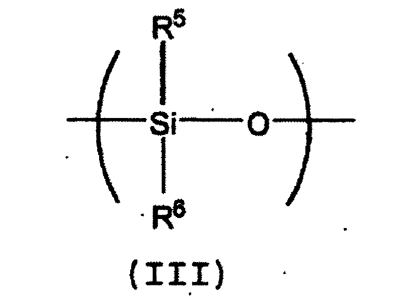 wobei das eine von R⁵ und R⁶ eine Polymerkette darstellt, die eine Verkettung von wenigstens einer sich wiederholenden Einheit umfaßt, welche Träger wenigstens einer Gruppe -PO₃R¹R² ist, wobei R¹ und R² so wie in Anspruch 1 definiert sind, wohingegen die andere Gruppe eine Alkylgruppe darstellt.

4. Copolymer nach Anspruch 3, bei dem R⁶ eine Polymerkette darstellt, die eine Verkettung von sich wiederholenden Einheiten umfaßt, welche aus der Polymerisation wenigstens eines Vinylmonomers hervorgegangen ist, welches Träger einer Gruppe -PO₃R¹R² ist, wobei R¹ und R² so wie in Anspruch 1 definiert sind.

5. Copolymer nach Anspruch 4, bei dem das Vinylmonomer der nachfolgenden Formel (IV) genügt: 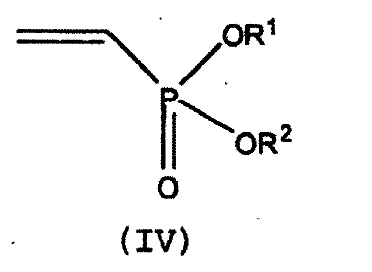 wobei R¹ und R² so wie in Anspruch 1 definiert sind, in welchem Fall die sich wiederholende Einheit, die aus der Polymerisation des Monomers hervorgegangen ist, der nachfolgenden Formel (V) genügt:

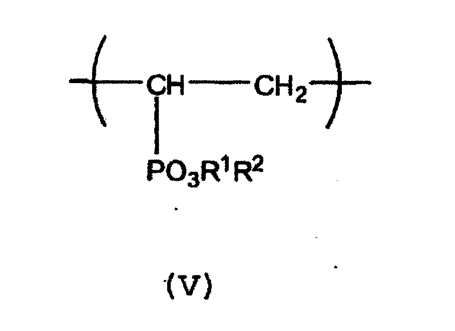

6. Copoylmer nach einem der vorhergehenden Ansprüche, ferner umfassend wenigstens eine sich wiederholende Siloxaneinheit eines dritten Typs, die der nachfolgenden Formel (VIII) genügt: 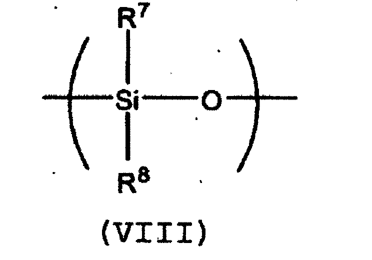 wobei R⁷ und R⁸ eine Alkylgruppe darstellen.

7. Copolymer nach einem der vorhergehenden Ansprüche, das ein Blockcopolymer ist.

8. Copolymer nach einem der vorhergehenden Ansprüche, das der nachfolgenden allgemeinen Formel (IX) genügt: 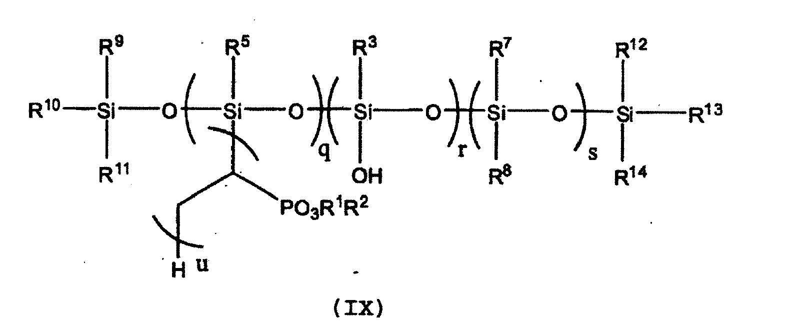 wobei:
- die R¹, R², R³, R⁵, R⁷ und R⁸ den gleichen Definitionen wie in den Ansprüchen 1, 2, 3 und 6 gegeben genügen;
- die R⁹, R¹⁰, R¹¹, R¹², R¹³ und R¹⁴ unabhängig voneinander eine Alkylgruppe darstellen;
- q, r, s und u die Anzahl der Wiederholungen der in Klammern eingefaßten Einheit darstellen, wobei q, r und u größer als Eins sind, und wobei s größer oder gleich Null ist.

9. Verfahren zur Herstellung eines Copolymers, wie es in Anspruch 1 definiert ist, umfassend einen Schritt des Reagierens, in Anwesenheit von Wasser und wenigstens einem organischen Lösungsmittel, eines Basis-(Co)Polymers vom Polysiloxantyp, umfassend eine Verkettung von sich wiederholenden Einheiten, wovon eine erste sich wiederholende Siloxaneinheit wenigstens ein Wasserstoffatom an dem Siliziumatom der Einheit umfaßt, in Anwesenheit einer Lewis-Säure vom Borantyp mit einem Vinylmonomer, welches Träger einer Gruppe -PO₃R¹R² ist, wobei R¹ und R² so wie in Anspruch 1 definiert sind, wodurch sich ein Copolymer bildet, das eine Verkettung von wenigstens zwei Typen von Siloxaneinheiten umfaßt, wovon ein erster Typ aus einer sich wiederholenden Siloxaneinheit besteht, die wenigstens eine Gruppe -OH umfaßt, die direkt an das Siliziumatom der Einheit gebunden ist, und wovon ein zweiter Typ aus einer sich wiederholenden Siloxaneinheit besteht, die wenigstens eine hängende Kette umfaßt, die direkt an das Siliziumatom der Einheit gebunden ist, wobei die hängende Kette aus einer Polymerkette besteht, umfassend eine Verkettung von sich wiederholenden Einheiten, welche Träger wenigstens einer Gruppe -PO₃R¹R² sind.

10. Verfahren nach Anspruch 9, bei dem das Basis-(Co)Polymer vom Polysiloxantyp eine Verkettung von sich wiederholenden Einheiten umfaßt, wovon eine erste sich wiederholende Siloxaneinheit wenigstens ein Wasserstoffatom an dem Siliziumatom der Einheit umfaßt, wobei diese erste Einheit der nachfolgenden allgemeinen Formel (XI) genügt: 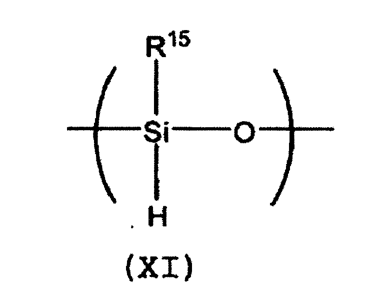 wobei R¹⁵ ein Wasserstoffatom oder eine Alkylgruppe ist.

11. Verfahren nach Anspruch 9 oder 10, bei dem das Basis-Copolymer ferner eine sich wiederholende Einheit der nachfolgenden Formel (XII) umfaßt: 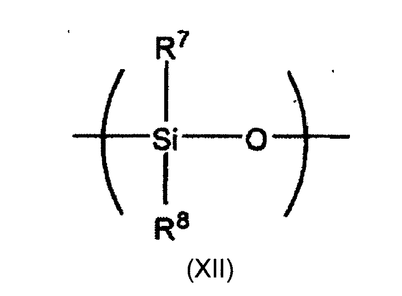 wobei R⁷ und R⁸ eine Alkylgruppe darstellen.

12. Verfahren nach einem der Ansprüche 9 bis 11, bei dem das Basis-Copolymer der nachfolgenden allgemeinen Formel (XIII) genügt: 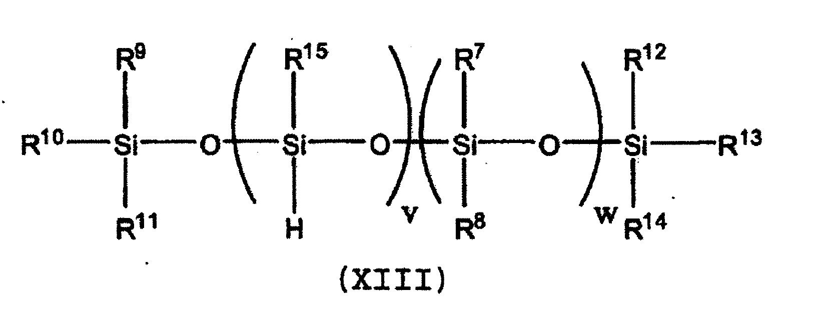 wobei:
- die R⁹, R¹⁰, R¹¹, R¹², R¹³, R¹⁴, R¹⁵, R⁷ und R⁸ so wie in den Ansprüchen 8 und 10 definiert sind; und
- v und w die Anzahl der Wiederholungen der zwischen Klammern eingefaßten Einheit darstellen.

13. Verfahren nach einem der Ansprüche 9 bis 12, bei dem in die Reaktionsumgebung, die ein organisches Lösungsmittel, Wasser und die Lewis-Säure vom Borantyp umfaßt, vor der Hinzufügung des Basis-Copolymers eine Monosilanverbindung hinzugefügt werden kann.

14. Anorganisches Partikel, das mit wenigstens einem Copolymer, wie es in einem der Ansprüche 1 bis 8 definiert ist, mittels wenigstens einer Gruppe -Si-OH des Copoylmers gepfropft ist, um eine Verbindung -Si-O- zwischen dem Copolymer und dem Partikel zu bilden.

15. Anorganisches Partikel nach Anspruch 14, das ein Oxidpartikel ist.

16. Membran für eine Brennstoffzelle, umfassend anorganische Partikel, wie sie in einem der Ansprüche 14 oder 15 definiert sind.

17. Brennstoffzellenvorrichtung, umfassend wenigstens eine Anordnung Elektrode-Membran-Elektrode, bei der die Membran so wie in Anspruch 16 definiert ist.

## Claims

1. A copolymer comprising a chain of siloxane repeat units of at least two different types, a first type of siloxane repeat unit comprising at least one -OH group on the silicon atom of the siloxane repeat unit and a second type of repeat unit comprising at least one pendant chain on the silicon atom of the said repeat unit, this pendant chain consisting of a polymer chain comprising a chain of repeat units carrying at least one group of formula -PO₃R¹R², wherein R¹ and R² independently of each other represent a hydrogen atom, an alkyl group or a cation.

2. The copolymer according to claim 1, wherein the repeat unit of the first type meets following formula (I): 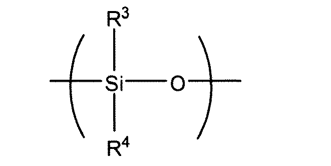 wherein one of R³ and R⁴ represents an -OH group whilst the other group represents an alkyl group.

3. The copolymer according to any of the preceding claims, wherein the repeat unit of the second type meets following formula (III): 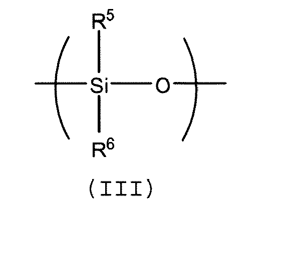 wherein one of R⁵ and R⁶ represents a polymer chain comprising a chain of at least one repeat unit carrying at least one -PO₃R¹R² group, R¹ and R² being such as defined in claim 1, whilst the other group represents an alkyl group.

4. The copolymer according to claim 3, wherein R⁶ represents a polymer chain comprising a chain of repeat units derived from the polymerisation of at least one vinyl monomer carrying a -PO₃R¹R² group, R¹ and R² being such as defined in claim 1.

5. The copolymer according to claim 4, wherein the vinyl monomer meets following formula (IV): 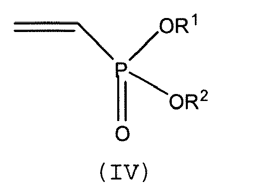 R¹ and R² being such as defined in claim 1, in which case the repeat unit derived from the polymerisation of said monomer meets following formula (V):

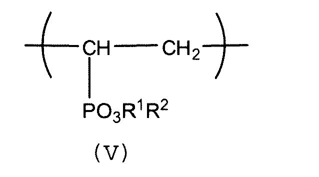

6. The copolymer according to any of the preceding claims, further comprising at least one siloxane repeat unit of a third type meeting following formula (VIII): 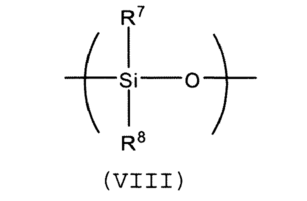 wherein R⁷ and R⁸ represent an alkyl group.

7. The copolymer according to any of the preceding claims, which is a block copolymer.

8. The copolymer according to any of the preceding claims, which meets the following general formula (IX): 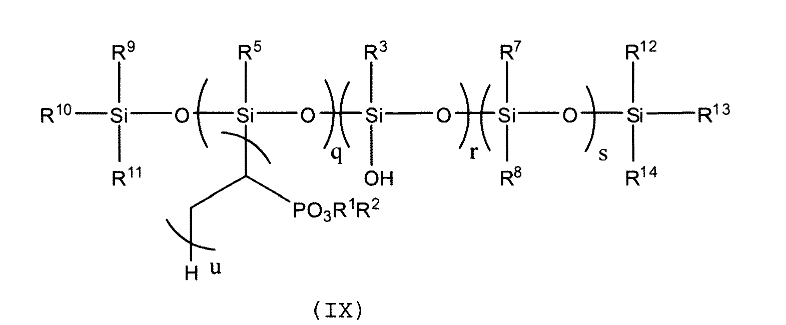 wherein
- R¹, R², R³, R⁵, R⁷ and R⁸ meet the same definitions as those given in claims 1, 2, 3 and 6.
- R⁹, R¹⁰, R¹¹, R¹², R¹³ and R¹⁴ independently of each other represent an alkyl group;
- q, r, s and u represent the number of repeats of the repeat unit between brackets, q, r and u being higher than 1 and s being equal to or higher than 0.

9. A method for preparing a copolymer such as defined in claim 1 comprising a reaction step, in the presence of water and at least one organic solvent, to react a base (co)polymer of polysiloxane type comprising a chain of repeat units including a first siloxane repeat unit having at least one hydrogen atom on the silicon atom of said repeat unit, in the presence of a Lewis acid of borane type, with a vinyl monomer carrying a -PO₃R¹R² group, R¹ and R² being such as defined in claim 1, after which a copolymer is formed comprising a chain of at least two types of siloxane repeat units of which a first type consists of a siloxane repeat unit comprising at least one -OH group directly bound to the silicon atom of said repeat unit and of which a second type consists of a siloxane repeat unit comprising a least one pendant chain directly bound to the silicon atom of the said repeat unit, the said pendant chain consisting of a polymer chain comprising a chain of repeat units carrying at least one -PO₃R¹R² group.

10. The method according to claim 9, wherein the base (co)polymer of polysiloxane type comprises a chain of repeat units including a first siloxane repeat unit which comprises at least one hydrogen atom on the silicon atom of said repeat unit, this first repeat unit meeting the following general formula (XI): 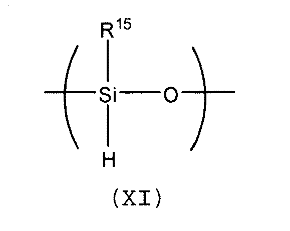 wherein R¹⁵ is a hydrogen atom or an alkyl group.

11. The method according to claim 9 or 10, wherein the base copolymer further comprises a repeat unit of following formula (XII): 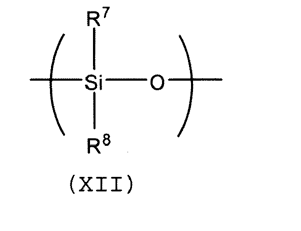 wherein R⁷ and R⁸ represent an alkyl group.

12. The method according to any of claims 9 to 11, wherein the base copolymer meets the following general formula (XIII): 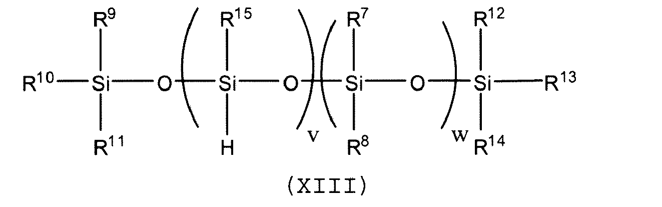 wherein:
- R⁹, R¹⁰, R¹¹, R¹², R¹³ R¹⁴, R¹⁵, R⁷ and R⁸ are such as defined in claims 8 and 10; and
- v and w represent the number of repeats of the repeat unit between brackets.

13. The method according to any of claims 9 to 12, wherein a monosilane compound can be added to the reaction medium comprising an organic solvent, water and Lewis acid of borane type, before adding the base copolymer.

14. An inorganic particle grafted by at least one copolymer such as defined according to any of claims 1 to 8 via at least one -Si-OH group of said copolymer to form a -Si-O- bonding group between said copolymer and said particle.

15. The inorganic particle according to claim 14, which is an oxide particle.

16. A fuel cell membrane comprising inorganic particles such as defined in any of claims 14 or 15.

17. A fuel cell device comprising at least one electrode-membrane-electrode assembly wherein the membrane is such as defined in claim 16.
